# EUROPEAN PATENT SPECIFICATION

(11) **EP 4 374 208 B1**
(45) Date of publication and mention of the grant of the patent: **02.09.2026**
(21) Application number: 22751423.9
(22) Date of filing: 20.07.2022
(51) Int. Cl.: G02B 7/02, G02B 27/64

(54) **ACTUATOR ASSEMBLY**
AKTUATORANORDNUNG
ENSEMBLE ACTIONNEUR

(30) Priority: 20.07.2021 GB 202110414; 06.01.2022 GB 202200084
(43) Date of publication of application: 29.05.2024
(73) Proprietor: Cambridge Mechatronics Limited, Cambridge CB4 0WG (GB)
(72) Inventor: BUNTING, Stephen Matthew, Cambridge Cambridgeshire CB4 1YG (GB); ARMSTRONG, Samuel, Cambridge Cambridgeshire CB4 1YG (GB); LANGHORNE, Robert, Cambridge Cambridgeshire CB4 1YG (GB); BROWN, Andrew Benjamin Simpson, Cambridge Cambridgeshire CB4 1YG (GB); HART, Oliver, Cambridge Cambridgeshire CB4 1YG (GB); AUCHOYBUR, Kiran, Cambridge Cambridgeshire CB4 1YG (GB); JOHNSON, Alexander, Cambridge Cambridgeshire CB4 1YG (GB); VAN WYK, Peter, Cambridge Cambridgeshire CB4 1YG (GB)
(74) Representative: Cambridge Mechatronics Limited
(86) International application number: PCT/GB2022/051877
(87) International publication number: WO 2023/002182

(56) References cited:
- WO-A1-2021/111131
- GB-A- 2 589 385
- US-A1- 2016 154 252
- US-A1- 2021 168 289

## Description

### Field

The present invention relates to an actuator assembly, particularly an actuator assembly comprising a one or more lengths of shape-memory alloy (SMA) wire.

### Background

An actuator assembly may be used, for example, in a camera to move a lens assembly in directions perpendicular to the optical axis so as to provide optical image stabilization (OIS), and/or parallel to the optical axis so as to provide autofocusing (AF). Where such a camera is to be incorporated into a portable electronic device such as a mobile telephone, miniaturization can be important.

Such actuator assemblies typically comprise a moving part, and intermediate part, and a static part. When used in a camera, the moving part may comprise a lens element, and the static part may comprise a camera can surrounding the lens element. The moving part is able to move relative to the intermediate part. The intermediate part is able to move relative to the static part. An actuator arrangement, for example a plurality of lengths of SMA wire, is used to drive the relative motion between the parts.

Endstops are used to limit the extent of the relative motion between the moving part and intermediate part, and between the intermediate part and the static part. The role of these endstops is two-fold. Firstly, endstops keep the moving and intermediate parts inside the envelope of the actuator assembly. Secondly, endstops protect the components that link between the different parts from being damaged. For example, these components might be electrical connections, SMA actuator wire, ball bearings or springs such as flexures. Conventionally, all endstops perform both functions, and so all endstops need to be sufficiently strong to bear the inertia of the moving portion. GB 2 589 385 A is a relevant prior art document.

### Summary

According to a first aspect of the present invention, there is provided an actuator assembly comprising: a static part; a moving part; an intermediate part; a first bearing arrangement which guides movement of the intermediate part relative to the static part; a second bearing arrangement which guides movement of the moving part relative to the intermediate part; and an actuator arrangement arranged to drive movement of the moving part relative to the static part; and at least one overall endstop between the static part and the moving part and arranged such that the moving part contacts the static part at a limit of movement of the moving part relative to the static part.

In conventional assemblies, separate endstops are used between the moving part and the intermediate part, and between the intermediate part and the static part. The endstop between the moving part and the intermediate part as well as the endstop between the intermediate part and the static part must be strong enough to convey the inertia of the moving part through to the static part. In the present invention, however, an overall endstop is used to limit motion of the moving part relative to the static part. This means that only the overall endstop needs to be strong enough to absorb the inertia of the moving part. Other endstops (such as endstops between moving part and intermediate part and endstops between intermediate part and static part) can be designed to be smaller and more compact, because they need not absorb the inertia of the moving part.

This invention is particularly useful where the mass of the moving part is greater or even significantly greater than the mass of the intermediate part. This is typical for actuator assemblies used in cameras, where the assembly is used to move a moving part comprising a lens element to provide optical image stabilization (OIS) and/or autofocussing (AF). In such actuator assemblies any endstop between the moving part and the intermediate part only needs to resist the inertia of the intermediate part. The inertia of the moving part can be absorbed by the larger overall endstop between the moving part and the static part. The overall endstop keeps the moving part inside the envelope of the actuator assembly. Endstops between the moving part and the intermediate part may be used to protect the components that link the moving part to the intermediate part, splitting the dual role of conventional endstops among multiple different endstops.

The actuator assembly may further comprise at least one moving-intermediate endstop between the intermediate part and the moving part and arranged such that the moving part contacts the intermediate part at a limit of movement of the moving part relative to the intermediate part. The actuator assembly may also further comprise at least one static-intermediate endstop between the intermediate part and the static part and arranged such that the intermediate part contacts the static part at a limit of movement of the intermediate part relative to the static part. The moving-intermediate endstop and the static-intermediate endstop may define a movement envelope of moving part relative to intermediate part, or of intermediate part relative to static part, and so protect components (such as FPCs, SMA wires, bearings, etc) connected between these respective parts. As discussed above, the moving-intermediate endstop does not have to absorb the inertia of the moving portion, and so can be smaller and weaker than the overall endstop.

The actuator arrangement may comprise an actuator stage arranged to drive movement of the moving part relative to the intermediate part guided by the second bearing arrangement. The actuator stage may be connected between the moving part and the intermediate part.

The actuator arrangement may further comprise a second actuator stage arranged to drive the movement of the intermediate part relative to the static part guided by the first bearing arrangement. The second actuator stage may be connected between the intermediate part and the static part.

The actuator assembly may further comprise (e.g. as an alternative to the second actuator stage) a biasing arrangement arranged to bias the movement of the intermediate part relative to the static part guided by the first bearing part towards a central position. The biasing arrangement may allow the intermediate part to move from its central position during impact events, such as drops. This provides some flexibility protecting components on or between the intermediate part and moving part (e.g. bearing arrangements between intermediate part and moving part).

Movement of the moving part relative to the intermediate part guided by the second bearing arrangement may comprise or be translational movement along a predetermined axis. So, movement of the moving part relative to the intermediate part may be translational movement along the predetermined axis or helical movement about the predetermined axis. The predetermined axis may be an optical axis of a lens that is fixed relative to the moving part. Where the assembly is used in camera, this may provide an autofocussing capability.

Movement of the intermediate part relative to the static part guided by the first bearing arrangement may be translational movement orthogonal to the predetermined axis. Such movement may provide OIS when the assembly is used in a camera.

Movement of the intermediate part relative to the static part guided by the first bearing arrangement may be rotational movement about two orthogonal axes perpendicular to the predetermined axis. Such movement may provide OIS when the assembly is used in a camera.

The actuator arrangement may comprise a single actuator stage arranged to drive relative movement between any two of the moving part, the intermediate part and the static part. This may provide movement in multiple directions, with fewer components. This is useful where miniaturisation is important.

The single actuator stage may be configured to independently drive movement of the moving part relative to the intermediate part guided by the second bearing arrangement and movement of the intermediate part relative to the static part guided by the first bearing arrangement.

The actuator assembly may further comprise a third bearing arrangement which guides movement of the moving part relative to the static part.

The movement of the moving part relative to the intermediate part guided by the second bearing arrangement may be helical movement around a predetermined axis, the movement of the intermediate part relative to the static part guided by the first bearing arrangement may be translational movement orthogonal to the predetermined axis and/or rotational movement around a line parallel to the predetermined axis, and the movement of the moving part relative to the static part guided by the third bearing arrangement may be translational movement along the predetermined axis and/or translational movement orthogonal to the predetermined axis.

The movement of the moving part relative to the intermediate part guided by the second bearing arrangement may be translational movement orthogonal to the predetermined axis, and the movement of the intermediate part relative to the static part guided by the first bearing arrangement may be helical movement around the predetermined axis.

The actuator arrangement may comprise at least one shape memory alloy, SMA, wire. In particular, the or each actuator stage may comprise at least one shape memory alloy wire.

The overall endstop is configured to limit translational movement (e.g. along one or more orthogonal axes, preferably three orthogonal axes) of the moving part relative to the static part and/or to limit rotational movement (e.g. about one or more orthogonal axis, preferably three orthogonal axes) of the moving part relative to the static part.

The overall endstop may comprise at least one surface on the static part configured to engage (at a limit of movement) with a substantially conformal surface on the moving part so as to limit the movement.

The moving part may comprise a lens element having an optical axis. The optical axis may be the predetermined axis.

The static part may comprise a screening can that extends around the lens element, the intermediate part, and the actuator arrangement, and the at least one overall endstop may be provided at least in part by the screening can.

The mass of the intermediate part may be less than the mass of the moving part.

According to a second aspect not falling under the scope of the claims, there is provided an actuator assembly comprising: a static part; a moving part; an intermediate part; a first bearing arrangement which guides movement of the intermediate part relative to the static part; a biasing arrangement arranged to bias the movement of the intermediate part relative to the static part guided by the first bearing part towards a central position; a second bearing arrangement which guides movement of the moving part relative to the intermediate part; and an actuator arrangement arranged to drive movement of the moving part relative to the intermediate part.

In some conventional actuator assemblies, such as cameras with autofocussing (AF) but no optical image stabilisation (OIS), the intermediate part may be fixedly attached to the static part. Any impact causing movement of the moving part must be transferred through the intermediate part. In the second aspect of the present invention, however, the intermediate part is able to move on the first bearing arrangement, allowing some of the energy of impacts to be dissipated. The biasing arrangement provides a lightweight mechanism for restoring the intermediate part, and hence the moving part, to its central position. This arrangement also allows overall endstops to be used between the moving part and the static part, to further limit the impulse that must be conveyed through components of the intermediate part during impacts.

The actuator arrangement may comprise at least one shape memory alloy wire.

The moving part may comprises a lens element. The static part may comprise an image sensor.

The lens element has an optical axis, and the second bearing arrangement may guide movement of the moving part relative to the intermediate part along the optical axis, and the first bearing arrangement may guide movement of the intermediate part perpendicular to the optical axis.

The static part may comprise a screening can that extends around the lens element, the intermediate part, and the actuator arrangement, and at least one overall endstop may be provided between the screening can and the moving part, the at least one overall endstop arranged such that the moving part contacts the screening can at a limit of movement of the moving part relative to the static part.

To allow better understanding, embodiments of the present invention will now be described by way of non-limitative example with reference to the accompanying drawings, in which:
Fig. 1 illustrates an actuator assembly employing a conventional, staged endstop arrangement;
Fig. 2 illustrates an actuator assembly according to the present invention, employing overall endstops;
Fig. 3 illustrates an alternative embodiment of the actuator assembly of Fig. 2;
Fig. 4 illustrates a further alternative embodiment of the actuator assembly of Fig. 2;
Fig. 5 illustrates a further alternative embodiment of the actuator assembly of Fig. 2;
Fig. 6 illustrates an actuator assembly according to the present invention, comprising a biasing mechanism;
Fig. 7 illustrates an alternative embodiment of the actuator assembly of Fig. 6, comprising overall endstops;
Fig. 8 illustrates an actuator assembly according to the present invention, employing overall endstops;
Fig. 9 illustrates an alternative embodiment of the actuator assembly of Fig. 8;
Fig. 10 shows in exploded view an example of the actuator assembly of Fig. 8;
Fig. 11 shows in exploded view an example of the actuator assembly of Fig. 9;
Figs 12A and B show embodiments of the actuator assembly of Fig. 5 including spherical endstops; and
Figs 13A and B show concepts for reducing the risk of denting in rolling bearings.

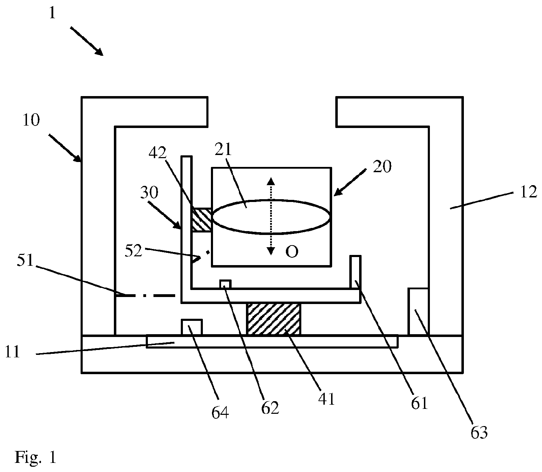

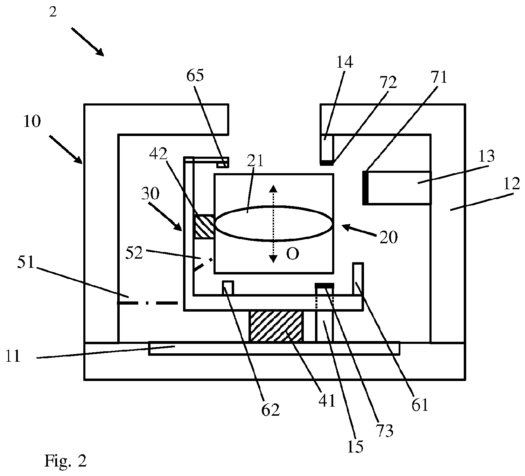

To enable a better understanding of the present invention, Fig. 1 illustrates an actuator assembly 1 employing conventional staged endstops 61-64. Fig. 2 illustrates an actuator assembly 2 according to the present invention, in which overall endstops 71-73 are used.

Both actuator assemblies 1,2 comprise a static part 10, a moving part 20, and an intermediate part 30. It will be appreciated that the labels "static" and "moving" are used herein simply to illustrate that one part may move relative to another. In practice, the static part 10 may move (e.g. within a device in which the actuator assembly is integrated), and the moving part may be stationary (e.g. within a device in which the actuator assembly is integrated), as long as the moving part is movable relative to the static part. The static part may also be referred to as a support structure, and the moving part may also be referred to as a movable part.

In the illustrated examples, the actuator assemblies 1,2 are arranged for use in a camera. To this end, the actuator assemblies 1,2 comprise an image sensor 11 on the static part 10 and a lens element 21 supported by the moving part 20. The lens element 21 focuses light on the image sensor 11 to form an image. The moving part 20 supporting the lens element 21 may be considered a lens carriage. The image sensor 11 may be a charge-coupled device (CCD) or a complementary metal-oxide-semiconductor (CMOS) device. In alternative embodiments the image sensor 11 may be positioned on the intermediate part 30. In further alternative embodiments, the image sensor 11 may be fixed relative to the moving part 20, and the lens element 21 may be fixed relative to the static part 10 or relative to the intermediate part 30. In general, the image sensor 11 and/or lens element 21 need not be provided.

The moving part 20 is moveable with respect to the intermediate part 30, and the intermediate part 30 is moveable with respect to the static part 10 along bearing arrangements 41, 42. A first bearing arrangement 41 guides movement of the intermediate part 30 relative to the static part 10. In Figs. 1 and 2 this movement is translational movement orthogonal to a predetermined axis. The predetermined axis may be an axis of motion of the moving part 20 with respect to the intermediate part 30. The predetermined axis may also be referred to as a principal axis. Where the moving part 20 comprises a lens element 21, as in the illustrated examples, the predetermined axis may be an optical axis O defined by the lens element 21. Thus in actuator assemblies 1,2, if the optical axis O is considered to be the *z* axis in an *xyz* coordinate system, the intermediate part 30 is moveable relative to the static part along the *x* and/or *y* axes.

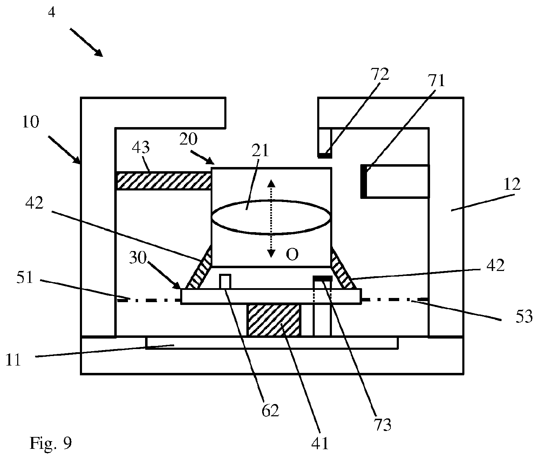

A second bearing arrangement 42 guides movement of the moving part relative to the intermediate part. In Figs. 1 and 2 this movement comprises translational movement along the predetermined axis, e.g. the optical axis O. The translational movement may be purely linear, or may be helical (i.e. the moving part 20 may rotate about the predetermined axis as it moves along the predetermined axis). An example of helical motion is described in more detail below in relation to Figs. 9.

The actuator assemblies 1,2 further comprise an actuator arrangement arranged to drive movement of the moving part 20 relative to the static part 30. In the illustrated examples thus actuator arrangement comprises a first actuator stage 51 and second actuator stage 52. The first actuator stage 51 is arranged to drive the movement of the intermediate part 30 relative to the static part 10 guided by the first bearing arrangement 41. Thus the first actuator stage 51 in the illustrated examples drives movement along the *x* and/or *y* axes. This movement may be used to provide optical image stabilisation (OIS) in a camera. The second actuator stage 52 is arranged to drive movement of the moving part 20 relative to the intermediate part 30 guided by the second bearing arrangement 42. Thus the second actuator stage in the illustrated examples drives movement along the z axis (e.g. translational movement or helical movement), parallel to the optical axis O. This movement may be used to provide autofocusing (AF) in a camera.

The first actuator stage 51 and second actuator stage 52 may each comprise at least one shape memory alloy (SMA) wire. Contraction of the at least one SMA wire will exert a force between the respective parts 10, 20, 30, causing motion. Multiple lengths of SMA wire may be used to provide translation and/or rotation in desired directions. For example, the first actuator stage 51 may comprise four SMA wires in an arrangement as described in WO2013175197, which is herein incorporated herein by reference. The second actuator stage 52 may comprise one or more SMA wires in an arrangement as described in WO2007113478, WO2017134456 or WO2019243849, each of which is herein incorporated by reference.

The static part 10 may comprise a protective housing to protect the moving part 20 and intermediate part 30. In the illustrated actuator assemblies 1,2, arranged for use in a camera, the static part 10 comprises a screening can 12 that extends around the moving part 20 (and lens element 21), the intermediate part 30, and the actuator arrangement 51, 52. The screening may comprise an aperture to enable outside light to be received by the lens element 21.

Referring to Fig. 1, the comparative actuator assembly 1 comprises a plurality of staged endstops 61-64 arranged to limit the range of motion of the moving part 20 and intermediate part 30. Staged endstops 61 and 62 limit the motion of the moving part 20 with respect to the intermediate part 30 in the horizontal (*x* or *y*) and vertical directions (*z*) respectively. Although only illustrated as stopping motion towards the image sensor 11 or to the right of the drawing (from the viewer's perspective), it will be appreciated that there may be additional endstops limiting motion of the moving part 20 to the left of the drawing; away from the image sensor 11; and/or into or out of the plane of the drawing. Staged endstops 63 and 64 limit the motion of the intermediate part 30 with respect to the static part 10 in the horizontal (*x* or *y*) and vertical directions (*z*) respectively. Again it will be appreciated that only a limited set of endstops are illustrated, and further endstops to limit motion in both directions along each axis may be used.

Consider the case of an impact (e.g. on the right side of screening can 12) moving the moving part 20 to the right of Fig. 1, forcing the intermediate part 30 also to the right into contact with the static portion 10. In this case the impulse from the mass of the moving portion 20 passes through the endstop 61 between the moving part 20 and the intermediate part 30, through the intermediate part 30, and then also through the endstop 63 between the intermediate part 30 and the static portion 10. This means that both endstops 61, 63 need to be large enough to absorb the impulse of the mass of the moving part 20, without minimal risk of damage to the endstops. It also means that the intermediate part needs to be made strong enough to take the strains of this impulse to transmit this impulse between the endstops 61, 63. If the impact was to the left, then the second bearing arrangement 42 would also have to be strong enough to convey the impulse from the mass of the moving portion 20.

So, endstops are used to protect components from damage during impacts, and to constrain the range of motion of components such as the moving part 20 within an envelope of the assembly 3. Conventional actuator assemblies use staged endstops between the moving part 20 and intermediate part 30, and between the intermediate part 30 and the static part 10. In this staged arrangement, in an impact which forces the moving part 20 to move, the impulse from the mass of the moving portion 20 passes through the endstop between the moving part 20 and the intermediate part 30. The impulse then passes through the intermediate part 30, and then also through the endstop between the intermediate part 30 and the static portion 10. This means that all staged endstops need to be large enough to take the impulse of the mass of the moving part 20. It also means that the intermediate part 30 needs to be made strong enough to take the strains of this impulse to transmit this impulse between the staged endstops. Similarly, components such as second bearing 42 must also be able to withstand the impulse due to the mass of the moving part 30.

In typical uses, such as where the actuator assembly 1,2 is used in a camera, the mass of the moving part 20 is larger than the mass of the intermediate part 30. This means that in the conventional endstop arrangement of Fig. 1 the components connecting the moving part 20 and the intermediate part 30 have to be particularly strong to withstand the impacts discussed above. Even in situations in which the mass of the moving part 20 is less or comparable to the mass of the intermediate part 30, the endstops 63, 64 between intermediate part 30 and static part 10 need to be strong enough to absorb impacts due to the combined mass of moving part 20 and intermediate part 30.

In contrast to the staged endstop arrangement of Fig. 1, in the present invention the actuator assembly 2 comprises at least one overall endstop between the moving part 20 and the static part 10. The overall endstop is arranged such that the moving part 20 contacts the static part 10 at a limit of movement of the moving part 20 relative to the static part 10. For the purposes of this application, the term endstop is to be understood to refer to the combination of contact regions (or endstop surfaces) on two parts that contact one another at a limit of relative movement. The endstop surfaces are surfaces of two parts that first engage when one part moves towards another part. For example, the overall endstop may comprise an endstop surface on the moving part 20 and an endstop surface on the static part 10. The two endstop surfaces may engage so as to limit movement of the moving part 20 relative to the static part 10 at a movement limit between the static and moving parts. So, the overall endstop receives the impulse from the mass of the moving part 20, rather than the intermediate part 30 or components connecting the intermediate part 30 to the moving part 20.

### Provision of overall endstops

Fig. 2 illustrates an embodiment of an actuator assembly 2 with overall endstops 71-73. In this example, the static part 10 is formed with protrusions 13-15 extending towards the moving part 20. The surfaces of the protrusions 13-15 which face the moving part 20 form part of the overall endstops 71-73. The surfaces have been shown with thicker lines in the drawing for emphasis, but it is to be appreciated that the overall endstops 71-73 may simply be the unaltered surfaces of the protrusions 13-15. These surfaces of each overall endstop 71-73 may be configured to engage with a substantially conformal surface on the moving part 20 to limit motion of the moving part 20. In the illustrated embodiment the substantially conformal surfaces with which the depicted surfaces of the overall endstops 71-73 engage are part of the outer surface of the lens carriage/moving part 20.

Overall endstop 72 limits movement of the moving part 20 along the optical axis O in a direction away from the image sensor 11. Overall endstop 73 limits movement of the moving part 20 along the optical axis in a direction towards from the image sensor 11. So, overall endstops 72, 73 limit movement of the moving part 20 along the optical axis. Overall endstop 71 limits movement of the moving part 20 perpendicular to the optical axis O, i.e. in the *x* or *y* direction. For clarity only one endstop 71 is illustrated to limit movement perpendicular to the optical axis, in this case movement to the right of the drawing. It is to be appreciated that the actuator assembly 2 may comprise further overall endstops to limit movement to the left of the drawing, and into or out of the plane of the drawing. In general the actuator assembly 2 may comprise at least one overall endstop configured to limit one-, two-, or three-dimensional translational movement of the moving part 20 relative to the static part 10 and/or to limit rotational movement of the static part 20 around a line parallel to a or the predetermined axis (which may be the optical axis O). The one or more overall endstops may be provided at least in part by the screening can 12, as in the illustrated embodiment where overall endstops 71 and 72 are provided by surfaces of the screening can 12.

In the illustrated embodiment, the actuator assembly 2 further comprises intermediate endstops 61, 62, and 65 which limit movement of the moving part 20 relative to the intermediate part. Intermediate endstops are similar to endstops 61, 62 of the actuator assembly 1 of Fig. 1, but do not need to be designed to convey impacts from the moving part 20 to the static part 10. Intermediate endstops 62 and 65 limit movement along the optical axis O. Intermediate endstop 61 limits movement perpendicular to the optical axis O, in this case towards the right of the drawing. Further intermediate endstops may be used to limit movement to the left of the drawing, or into or out of the plane of the drawing, but are not shown for clarity. The intermediate endstops 61, 62 may be provided specifically to protect elements between the moving part 20 and the intermediate part 30, such as electrical connections or bearing arrangements (including ball bearings or flexures).

Alternatively or additionally, the actuator assembly 2 may comprise one or more static-intermediate endstops limiting movement of the intermediate part 30 relative to the static part 10 in one or more dimensions. The static-intermediate endstops may be similar to the endstops 61, 63 shown in Fig. 1, but do not need to be designed to resist impacts from the moving part 20. So, the actuator assembly 2 may further comprise intermediate endstops between the intermediate part 30 and the static part 10. Such intermediate endstops may be provided specifically to protect elements between the static part 10 and the intermediate part 30, such as electrical connections or bearing arrangements (including ball bearings or flexures). The overall endstops between the static part 10 and the moving part 20 may be arranged such that the intermediate endstops between moving part 20 and intermediate part 30 and the intermediate endstops between the static part 10 and the intermediate part 30 may not engage simultaneously.

In other embodiments, dedicated intermediate endstops (i.e. surfaces designed specifically to contact first as the intermediate part moves relative to the static part or relative to the moving part) may be omitted.

Considering again the case of an impact moving the moving part 20 to the right of the drawing, now for the actuator assembly 2 of Fig 2. The overall endstop 71 (along a specific movement direction) between the moving part 20 and the static part 10 is such that the intermediate endstop 61 (along the specific movement direction) between the moving part 20 and the intermediate part 30 cannot engage at the same time as the intermediate endstop (along the specific movement direction) between the intermediate part 30 and the static part 10. The overall endstop 71 is designed such that the intermediate part 30 does not simultaneously contact the static part 10 and the moving part 20 in the movement direction limited by the overall endstop 71 (in the depicted case in the x direction). In particular, the distance along a movement axis between the endstop surfaces of the overall endstop 71 is less than the sum of the distances along the movement axis between the moving part 20 and intermediate part 10, and between the intermediate part 20 and the static part 10 (and similarly for other overall endstops). This means that it is not possible for the impulse of the acceleration of the moving part 20 to be transmitted through the intermediate portion 30. Instead, the impulse from the mass of the moving part 20 passes through the overall endstop 71. This means that the impulse through the intermediate endstop 61 is only as large as the impulse required to accelerate the mass of the intermediate part 30, and not as large as the impulse required to accelerate the moving part 20.

Thus, the intermediate endstop 61, and similarly any other components between the moving part 20 and intermediate part 30 (e.g. second bearing arrangement 42), can be made smaller and lighter. The intermediate part 30 itself does not have to be as strong as is conventionally the case, and may also be made smaller and lighter. The is particularly beneficial when the actuator assembly is used in a portable device, such as a camera or smart phone, where reducing size and mass is desirable. There may also be benefit to the design of the first bearing arrangement 41 due to the overall endstop 73. There may also be benefit of reduced tolerances during AF and OIS integration if the lens carriage/moving part 20 can be used to align to the OIS.

It is noted that in Fig. 2, the distance between surfaces of the intermediate endstop 61 is less than the distance between endstop surfaces of the overall endstop 71. In general any relative distances may be used, as long as the overall endstop 71 engages before the intermediate part 30 contacts both static and moving parts. In other words, the distance between endstops surfaces of the overall endstop 71 is less than the sum of the distances between surfaces of the intermediate endstops between intermediate part 30 and static part and between intermediate part 30 and moving part 20.

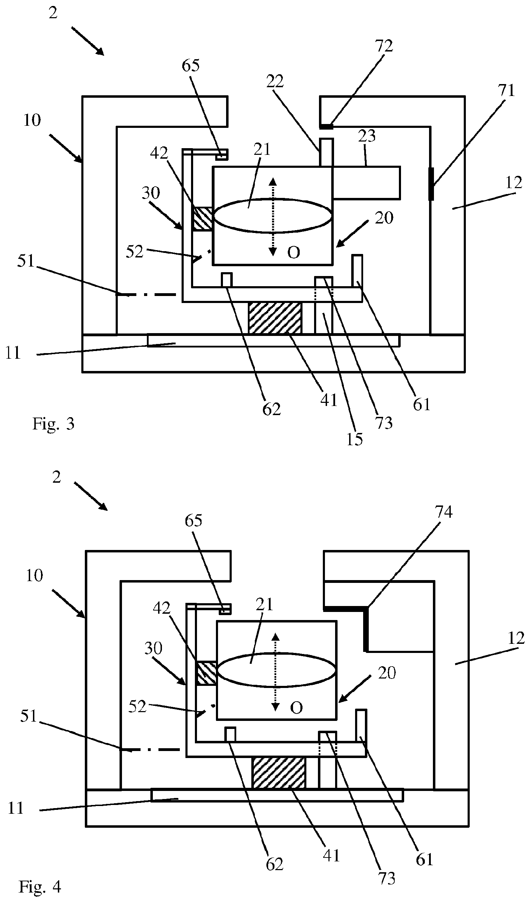

In Fig. 2, the overall endstops 71-73 are formed partly by surfaces of protrusions 13-15 extending from the static part 10. However, in other embodiments the moving part 20 may be shaped with protrusions. Fig 3 shows such an alternative embodiment of an actuator assembly 2. In Fig. 3, protrusions 22, 23 extend from the moving part 20 to reduce the distance between the static part 10 and the moving part 20. Protrusion 22 reduces the distance parallel to the optical axis O. Protrusion 23 reduces the distance perpendicular to the optical axis O. The protrusions 13,14 on the static part 10 in Fig 2 are omitted in the embodiment of Fig. 3. The overall endstops 71,72 are still formed partly by surfaces of the static part 10, but these surfaces are now substantially continuous with the adjacent surfaces of the static part 10. In this embodiment, overall endstop 71 limits movement perpendicular to the optical axis O when the moving part 20 moves far enough to the right of the drawing that the end surface of protrusion 23 engages with overall endstop 71. Similarly, overall endstop 72 limits movement parallel to the optical axis when the end surface of protrusion 22 engages with the overall endstop 72.

In the illustrated embodiment, overall endstop 73 is still formed by protrusion 15 of the static part 10. However, any of the overall endstops 71-73 (including any additional overall endstops to limit movement in both directions of the *x* and *y* axes and/or rotational movement) may be formed either by protrusions on the static part 10, or arranged to engage with protrusions on the moving part 20. The remaining features of Fig. 3 are substantially the same as the features of Fig. 2 discussed above. Similarly, protrusions may be provided on both moving part and static part to form an endstop. In general, pronounced protrusions need not be provided, and instead the endstop surfaces may be formed simply by surfaces on respective parts that first contact as the parts move towards one another in a particular direction.

Fig. 4 shows a further alternative embodiment of actuator assembly 2. In Fig. 4, overall endstops 71, 72 are combined into combined overall endstop 74. Combined overall endstop 74 is arranged to limit movement of the moving part in two directions. In the illustrated embodiment, combined overall endstop 74 limits movement parallel to the optical axis O (away from the image sensor 11) and perpendicular to the optical axis O (to the right of the drawing). In other embodiments combined overall endstop 74 may limit movement of the moving part 20 in more than two directions. For example, it may limit movement out of the plane of the drawing. In general, any number of the overall endstops discussed above in relation to Figs. 2 or 3 may be combined into one or more combined overall endstops 74. Combined overall endstop 74 may be formed by a protrusion on the static part 10, or may be arranged to engage with a protrusion on the moving part 20, as described above in relation to Figs. 2 and 3. The remaining features of Fig. 4 are substantially the same as the features of Fig. 2 discussed above.

### Tilt of the intermediate part

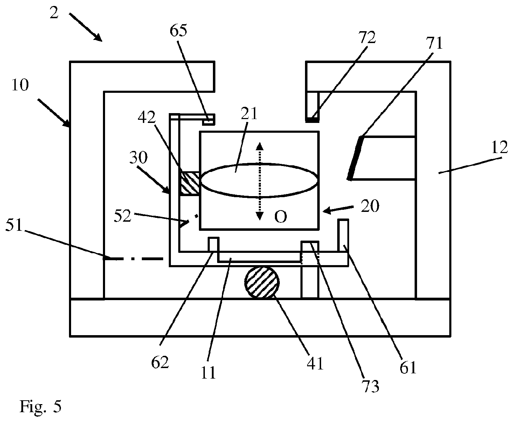

Fig. 5 shows a further alternative embodiment of actuator assembly 2. The embodiment of Fig. 5 may correspond in essence to the embodiments described with reference to Figs. 2-4, except that the first bearing arrangement 41 guides rotational movement or tilt of the intermediate part 30 relative to the static part 10. The first actuator stage 51 may be adapted accordingly. The first bearing arrangement 41 and the first actuator stage 51 may be as described in WO2010029316 or WO2011104518, each of which is herein incorporated by reference. The actuator assembly 2 may comprise an overall endstop 71 that limits rotation of the moving part 20 relative to the static part 10 about one or more axes that are orthogonal to the predetermined axis (e.g. optical axis).

In particular, the intermediate part 30 (and moving part 20) is able to tilt with respect to the predetermined axis. The embodiment of Fig. 5 is substantially similar to that of Fig. 2, except that the movement of the intermediate part 30 relative to the static part 10 guided by the first bearing arrangement 41 is rotational movement around a point on the predetermined axis, not translational movement along a predetermined axis. In particular, the rotation movement may be about an axis or two orthogonal axes perpendicular to the predetermined axis. In the illustrated embodiment the predetermined axis is the optical axis O. This provides a tilting of the intermediate part 30 relative to the optical axis O. The tilting may be limited to a single axis, such as the x axis or y axis (where z is parallel to the optical axis O), or may be about multiple axes. In the illustrated embodiment the image sensor 11 is supported on the intermediate part 30, so that it tilts with the lens element 21. The tilting can be used to provide optical image stabilisation (OIS) in a camera. Second bearing arrangement 42 guides movement of the lens element 21 along the optical axis O to provide autofocusing (AF).

The overall endstop 71 is modified relative to Fig. 2 to limit rotational movement of the moving part 20 around the point in the predetermined axis. In this case, the surface forming overall endstop 71 is angled relative to the optical axis so that it is substantially conformal with a surface of the moving part 20 at the intended limit of motion of the moving part 20. One or more other overall endstops, including endstops 72, 73, and non-illustrated endstops limiting movement to the left of the drawing, or into or out of the plane of the drawing may also be adapted to limit rotational movement of the moving part 20. As will be appreciated, the number of overall endstops adapted in this way will be related the number of axes about which the first bearing arrangement 41 allows movement. In general, one large overall endstop that entirely surrounds the moving part 20 (in a plane perpendicular to the optical axis) may be provided. As with the embodiment of Fig. 3, any protrusions may be provided on the moving part 20, rather than on the static part 10 as illustrated. In general, pronounced protrusions need not be provided. For overall endstops limiting rotation of the moving part 20, the corresponding surfaces of protrusions on the moving part 20 may be shaped such that the surfaces are parallel to the predetermined axis (e.g. optical axis O) at the intended limit of rotation of the moving part 20. In such cases, the corresponding overall endstops may be substantially continuous with the surrounding surfaces of the static part 10. In other words, the surface of a protrusion on the moving part 20 can be angled, so that the corresponding overall endpoint can be flat (flat as for endstop 71 in Fig. 3).

### Biasing arrangement instead of actuator stage between intermediate part and static part

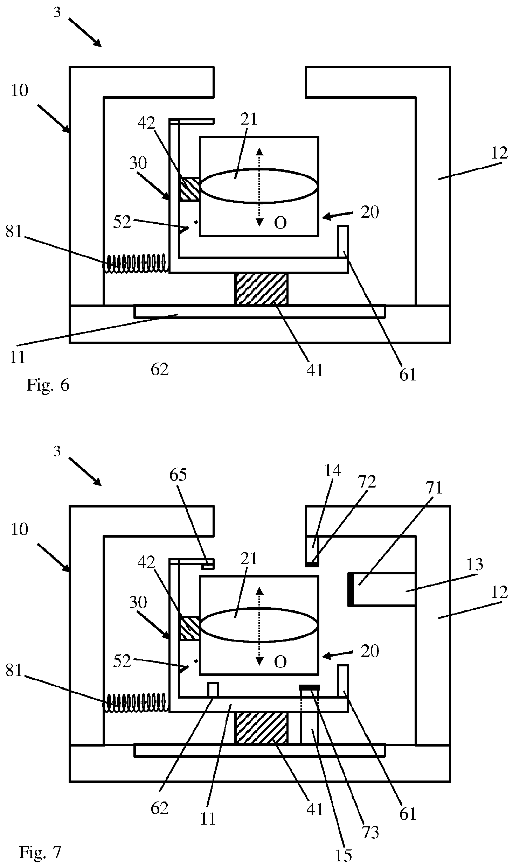

Fig. 6 illustrates an alternative embodiment of an actuator assembly 3 according to the present invention. The actuator assembly 3 may correspond in essence to actuator assembly 1 described in relation to Fig. 1, except that a biasing arrangement 81 is provided instead of actuator stage 51. The embodiment of Fig. 6 does not comprise the overall endstops 71-73. Fig. 7 depicts a further embodiment that combines the embodiment of Fig. 6 with the overall endstops 71-73.

Actuator assembly 3 comprises a static part 10, a moving part 20, and an intermediate part 30. The moving part 20 is moveable with respect to the intermediate part 30, and the intermediate part 30 is moveable with respect to the static part 10 along bearing arrangements 41, 42. A detailed description of these parts of actuator assembly 3 is provided above in relation to Figs. 1-5, and repetition will be avoided for reasons of conciseness. It will be appreciated that although Fig 6 depicts a bearing arrangement 41 guiding translational movement, the bearing arrangement 41 may alternatively guide rotational movement or tilt, as described in relation to Fig. 5.

The actuator assembly 3 further comprises an actuator arrangement 52 arranged to drive movement of the moving part 20 relative to the static part 30. The actuator arrangement 52 may corresponds to that described in relation to Figs. 1 and 2. The actuator arrangement 52 may comprise one or more SMA wires. The actuator arrangement 52 is arranged to drive movement of the moving part 20 relative to the intermediate part 30 guided by the second bearing arrangement 42. Thus the second actuator stage in the illustrated examples drives movement in the z direction, parallel to the optical axis O. This movement may be used to provide autofocusing (AF) in a camera. By causing movement of the moving part 20 with respect the intermediate part 30, which is attached to the static part via first bearing 41, the actuator arrangement 52 causes the moving part 30 to move relative to the static part 10.

Compared to the actuator assemblies 1, 2 of Figs. 1-5, the actuator assembly 3 further comprises a biasing arrangement 81 arranged to bias the movement of the intermediate part 30 relative to the static part 10 guided by the first bearing 41 part towards a central position. The central position may be a central translational position or a central rotational position. Compared to the actuator assembly 1 of Fig 1, there may be no actuator stage 51 between the intermediate part 30 and the static part 10 in the actuator assembly 3. Thus if an impact causes the intermediate part 30 to move from its default central position, the biasing arrangement 81 provides a force to automatically return the intermediate part 30 to its central position. This ensures that the horizontal (perpendicular to optical axis O) position of the lens element 21 is quickly restored to its central position in line with the image sensor 11. The biasing arrangement 81 may be formed from any suitable biasing material, such a one or more springs. The biasing arrangement 81 avoids that any impacts are absorbed solely by the second bearing arrangement 42 and/or the intermediate endstops between moving part 20 and intermediate part 30, thus reducing the risk of damage to these elements during impact events (such as drops).

Actuator assembly 3 may be particularly useful in cameras with autofocussing (AF), but without active optical image stabilisation (OIS). The biasing arrangement 81 may provide a small, low weight mechanism for maintaining horizontal positioning of a lens element 21, without limiting control of movement of the lens element 21 along the optical axis. Reducing size and weight of components is particularly important for use in portable devices. In some embodiments the biasing arrangement 81 may also be used to connect terminals of SMA wires of the actuator arrangement 52 to the static part 10, to enable control signals to be sent to actuate the lengths of SMA wire. In some embodiments an FPC may be used to connect the terminals of the SMA wires to the static part 10.

In some conventional autofocussing actuator assemblies, the intermediate part 30 is held fixed relative to the static part 10 (i.e. there is no first bearing arrangement 41). A ball bearing race is used to allow movement of the moving part 20 relative to the intermediate part 30, to provide the autofocussing. During an impact, the rigidity of the connection between the intermediate part 30 and the static part 10 means that the full impulse of the mass of the moving part 20 must be transferred to the components of the intermediate part 30. The intermediate part 30 and components connecting the intermediate part 30 and moving part 20 must be designed to withstand such an impulse. In contrast, the first bearing arrangement 41 and biasing arrangement 81 of actuator assembly 3 allow the intermediate part 30 to move in an impact, dissipating some of the impulse of the moving part 20. This arrangement also makes it possible to use overall endstops between the moving part 20 and static part 10 to limit movement of the moving part 20.

As explained previously, endstops are used to protect components from damage during impacts, and to constrain the range of motion of components such as the moving part 20 within an envelope of the assembly 3. Conventional actuator assemblies use staged endstops between the moving part 20 and intermediate part 30, and between the intermediate part 30 and the static part 10. In this staged arrangement, in an impact which forces the moving part 20 to move, the impulse from the mass of the moving portion 20 passes through the endstop between the moving part 20 and the intermediate part 30. The impulse then passes through the intermediate part 30, and then also through the endstop between the intermediate part 30 and the static portion 10. This means that all staged endstops need to be large enough to take the impulse of the mass of the moving part 20. It also means that the intermediate part 30 needs to be made strong enough to take the strains of this impulse to transmit this impulse between the staged endstops. Similarly, components such as second bearing 42 must also be able to withstand the impulse due to the mass of the moving part 30.

The embodiment of an actuator assembly 3 shown in Fig. 6 may comprise the conventional staged endstop arrangement described in relation to Fig. 1. Alternatively, the actuator assembly 3 may comprise at least one overall endstop arranged to contact the moving part 20 at a limit of movement of the moving part 20 relative to the static part 10. The overall endstop may correspond to the overall endstop described with reference to the embodiments of any one of Figs. 2 to 5. The overall endstop receives the impulse from the mass of the moving part 20, rather than the intermediate part 30 or components connecting the intermediate part 30 to the moving part 20.

Fig. 7 illustrates an embodiment of the actuator assembly 3 of Fig. 6, additionally with overall endstops 71-73. In the depicted embodiment, the overall endstops 71-73 correspond to those described in relation to Fig. 2. So, the actuator assembly 3 of Fig 7 may correspond in essence to the actuator assembly 2 of Fig 2, with the exception that the actuator stage 51 is replaced by the biasing arrangement 81. There may be no actuator stage 51 between the intermediate part 30 and the static part 10 in the actuator assembly 3. In general, the overall endstops 71-73 of the embodiment of Fig. 7 may take the form described in relation to any one of Figs. 2 to 5. So, the at least one overall endstop may be configured to limit one-, two-, or three-dimensional translational movement of the moving part 20 relative to the static part 10 and/or to limit rotational movement (tilt) of the moving part 20 about axes parallel or orthogonal to the predetermined axis (which may be the optical axis O). The one or more overall endstops may be provided at least in part by the screening can 12, as in the illustrated embodiment where overall endstops 71 and 72 are provided by the screening can 12.

As shown, the actuator assembly 2 may optionally comprises intermediate endstops 61, 62, and 65 which limit movement of the moving part 20 relative to the intermediate part 30 and/or intermediate endstops (not shown) which limit movement of the intermediate part 30 relative to the static part 10. The intermediate endstops may be similar to the staged endstops described in relation to Fig. 1, but do not need to be designed to convey impacts from the moving part 20 to the static part 10. The intermediate endstops may be as described in relation to Figs. 2-5.

### Single stage actuator with multiple degrees of freedom

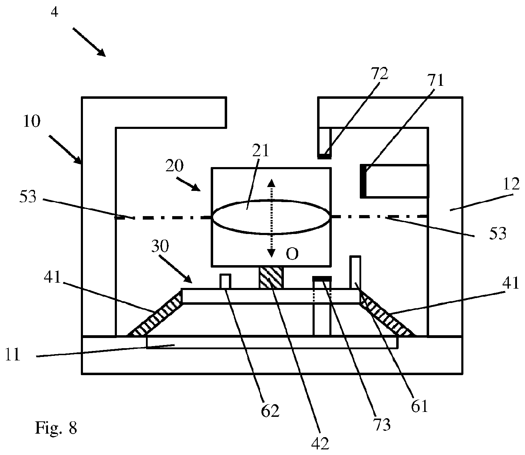

Fig. 8 shows an alternative actuator assembly 4. Actuator assembly 4 uses a single stage actuator to (independently) generate movement of a moving part 20 both parallel and perpendicular to a predefined axis. Actuator assembly 4 may be considered an embodiment of the actuator assembly 2 described above. The single stage actuator may be arranged to apply forces between moving part 20 and static part 10. Compared to the embodiments, of Figs. 2-5, no actuator stage may be provided between intermediate part 30 and static part 10. Compared to the embodiment of Fig. 7, the single stage actuator may be arranged to move the moving part 20 in multiple degrees of freedom, for example both along the predetermined axis and lateral to the predetermined axis.

Actuator assembly 4 comprises a static part 10, a moving part 20, and an intermediate part 30. A detailed description of these parts is provided above in relation to Figs. 1 and 2 and will be omitted here for reasons of conciseness.

The moving part 20 is moveable with respect to the intermediate part 30, and the intermediate part 30 is moveable with respect to the static part 10 along bearing arrangements 41, 42. A first bearing arrangement 41 guides movement of the intermediate part 30 relative to the static part 10. In Fig. 8 this movement is helical movement around a predetermined axis. Where the moving part 20 comprises a lens element 21, as in the illustrated example, the predetermined axis may be an optical axis O defined by the lens element 21. The first bearing arrangement 41 is configured such that rotation of the intermediate part 30 around the predetermined axis causes the intermediate part 30 to translate along the predetermined axis. This linked rotation and translation yields helical motion. In some embodiments the first bearing arrangement is a flexure bearing arrangement, comprising one or more flexure arms arranged to covert rotational movement into translational movement along the predetermined axis.

A second bearing arrangement 42 guides movement of the moving part 20 relative to the intermediate part 30. In Fig. 8 this movement comprises translational movement perpendicular to the predetermined axis, e.g. the optical axis O. Considering an *xyz* coordinate system, with the z axis parallel to the optical axis O, the second bearing arrangement 42 may guide movement along the x and/or y axes. The second bearing arrangement 42 is configured such that rotation of the moving part 20 around the predetermined axis causes rotation of the intermediate part 30. Thus whilst the moving part 20 is free to translate relative to the intermediate part 30, any rotation of the moving part 20 also causes rotation of the intermediate part 30.

The actuator assembly 4 further comprises an actuator arrangement 53 arranged to drive relative movement between two of the moving part 20, the intermediate part 30 and the static part 10. The actuator arrangement 53 comprises a single actuator stage configured to drive movement both perpendicular to and parallel to the predetermined axis. In the illustrated embodiment, the actuator arrangement 53 connects between the static part 10 and the moving part 20. The actuator arrangement 53 is operable to drive translation of the moving part 20 relative to the intermediate part 20 and static part 10 in a direction perpendicular to the predetermined axis, guided by second bearing arrangement 42. This translation can be used to provide optical image stabilisation (OIS) in a camera.

The actuator arrangement 53 is further operable to drive rotation of the moving part 20 around the predetermined axis (e.g. optical axis O). When actuator arrangement 53 drives rotation of the moving part 20, the second bearing arrangement 42 causes the intermediate part 30 to also rotate around the predetermined axis. The first bearing arrangement 41, configured to guide helical movement, coverts this rotation of the intermediate part 30 into translation of the intermediate part 30 along the predetermined axis. The second bearing arrangement 42 is such that the moving part 20 also translates along the predetermined axis with the intermediate part 30. Thus, the single stage actuator arrangement 53, connecting only between the static part 10 and moving part 20, is able to drive movement both parallel and perpendicular to the predetermined axis. Translation of the moving part 20 along the optical axis may be used for autofocussing in a camera.

The actuator arrangement 53 comprises at least one shape memory alloy (SMA) wire. In particular, a 4-wire SMA arrangement may be used, as discussed in more detail in WO2013175197, which is incorporated herein by reference. Contraction of the at least one SMA wire will exert a force between the respective parts 10 and 20, causing translation or rotation of the moving part 20 relative to the static part 10.

The static part 10 may comprise a protective housing to protect the moving part 20 and intermediate part 30. In the illustrated actuator assembly 4, arranged for use in a camera, the static part 10 comprises a screening can 12 that extends around the moving part 20 (and lens element 21), the intermediate part 30, and the actuator arrangement 51, 52. The screening can comprises an aperture to enable outside light to be received by the lens element 21.

In contrast to conventional staged endstop arrangements, in actuator assembly 4 the static part 10 comprises at least one overall endstop arranged to contact the moving part 20 at a limit of movement of the moving part 20 relative to the static part 10. The overall endstop receives the impulse from the mass of the moving part 20, rather than the intermediate part 30 or components connecting the intermediate part 30 to the moving part 20.

Fig. 8 illustrates actuator assembly 4 comprising overall endstops 71-73. The overall endstops may be configured and arranged as discussed in relation to the embodiments of any one of Figs. 2-7. In the depicted example, the overall endstops correspond essentially to those in Fig. 2, in that the static part 10 is formed with protrusions 13-15 extending towards the moving part 20. The surfaces of the protrusions 13-15 which face the moving part 20 form the overall endstops 71-73. In general, the actuator assembly 4 may comprise at least one overall endstop configured to limit one-, two-, or three-dimensional translational movement of the moving part 20 relative to the static part 10 and/or to limit rotation of the moving part 20 relative to the static part 20 around any of three perpendicular axes. The one or more overall endstops may be provided at least in part by the screening can 12, as in the illustrated embodiment where overall endstops 71 and 72 are provided by the screening can 12.

As discussed in relation to the preceding embodiments, the actuator assembly 4 may further comprise intermediate endstops 61, 62 which limit movement of the moving part 20 relative to the intermediate part 30, or intermediate endstops (not shows) that limit movement of the intermediate part 30 relative to the support structure 10. These intermediate endstops may be similar to the staged endstops between the moving part 20 and intermediate part 30 used in conventional actuator assembly arrangements (such as in Fig. 1), but do not need to be designed to convey impacts from the moving part 20 to the static part 10.

Although the embodiment of Fig. 8 uses helical motion between the intermediate part 30 and the static part 10, in general either of the movement of the moving part 20 relative to the intermediate part 30 guided by the second bearing arrangement 42 or the movement of the intermediate part 30 relative to the static part 10 guided by the first bearing arrangement 41 may be helical movement around the predetermined axis. For example, the function of the first bearing arrangement 41 and second bearing arrangement 42 in the embodiment of Fig. 8 may be swapped.

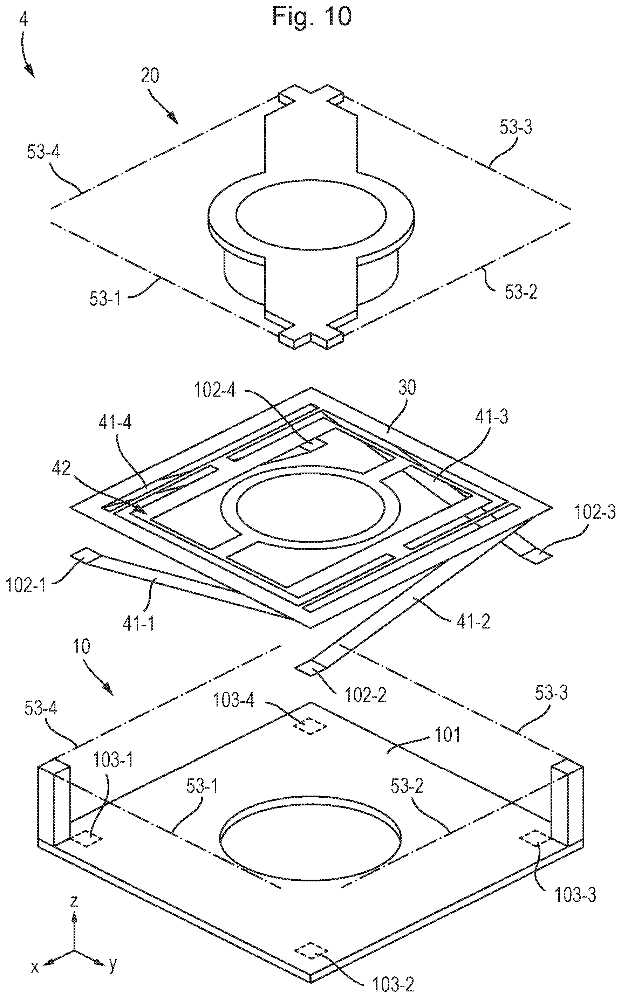

Fig. 10 illustrates a particular embodiment of the actuator assembly 4 of Fig. 8. Fig. 10 shows an exploded perspective view of the actuator assembly 4. For clarity, the overall endstops 71-73 are not illustrated in Fig. 10. The embodiment of Fig. 10 is a version of that discussed in relation to Figs. 26-28 of GB2005573.6, which is incorporated herein by reference, modified to incorporate the overall endstops 71-73 discussed above.

The actuator assembly 4 takes the form of a single stage, four-SMA-wire actuator assembly. The actuator assembly 4 may be used to enable three- dimensional translational movement Tx, Ty and/or Tz of a moving part 20, without trying to constrain rotation Rz of the moving part 20 about the optical axis O (parallel to the primary axis z).

The actuator assembly 4 includes a moving part 20, a static part 10 and an intermediate part 30 mechanically coupling the moving part 20 to the static part 10. The actuator assembly 4 also includes an implementation of a 4-wire SMA actuator arrangement. The 4-wire actuator arrangement comprises four lengths of SMA wire 53-1, 53-2, 53-3, 53-4. Each length of SMA wire 53-1, 53-2, 53-3, 53-4 is attached to respective points on the moving part 20 and the static part 10. Contraction of one or more of the lengths SMA wire 53-1, 53-2, 53-3, 53-4 drives the translational or rotational movement of the moving part 20 relative to the static part 10. This actuator arrangement is discussed in further detail in GB2005573.6, which is incorporated herein above. In particular, the actuator assembly is discussed in relation to Fig. 3 of that document.

The static part 10 includes a base plate 101 in the form of an annulus having a rectangular outer perimeter and a circular inner perimeter. A primary axis *z* extends perpendicular to the base plate 101. First *x* and second axes *y* are perpendicular to the predetermined axis *z,* and the second axis *y* is different to first axis x. In Fig. 10, the first and second axes *x*, *y* are perpendicular to one another.

The (non-illustrated) drive arrangement attaches between the moving part 20 and the static part 10 to drive translation movement of the static part 20 along the *x* or *y* axes. The drive arrangement further drives rotation around the predetermined axis *z.*

The actuator assembly 4 includes a first bearing configured to generate, in response to a torque applied about the primary axis *z* by the drive arrangement, movement of the moving part 20 towards or away from the static part 10 along the primary axis *z.* The first bearing provides this function by guiding helical movement [Tz, Rz] about and along the primary axis z, by coupling a rotation Rz about the predetermined axis z to a translation Tz along the primary axis *z.* A rotation Rz of the first bearing about the predetermined axis z will correspond to a rotation Rz of the first part 24 relative to the second part 25 about the predetermined axis z.

In the example shown in Fig. 10, the first bearing takes the form of a helical flexure formed from four straight helical beam portions 41-1, 41-2, 41-3, 41-4 extending from the intermediate part 30 to respective pads 102-1, 102-2, 102-3, 102-4 at the free ends. The pads 102-1, 102-2, 102-3, 102-4 are fixed to the base plate 101 of the static part 10 at corresponding attachment locations 103-1, 103-2, 103-3, 103-4. In this way, the first bearing mechanically couples the static part 10 to the intermediate part 30.

The actuator assembly 4 also includes a second bearing assembly 42 mechanically coupling the moving part 20 to the intermediate part 30 and configured to guide movements Tx and/or Ty of the first part 24 relative to the third part 34 along the first axis x and/or the second axis y. The second bearing assembly 42 should also constrain rotation Rz of the moving part 20 relative to the intermediate part 30 about the primary axis *z.*

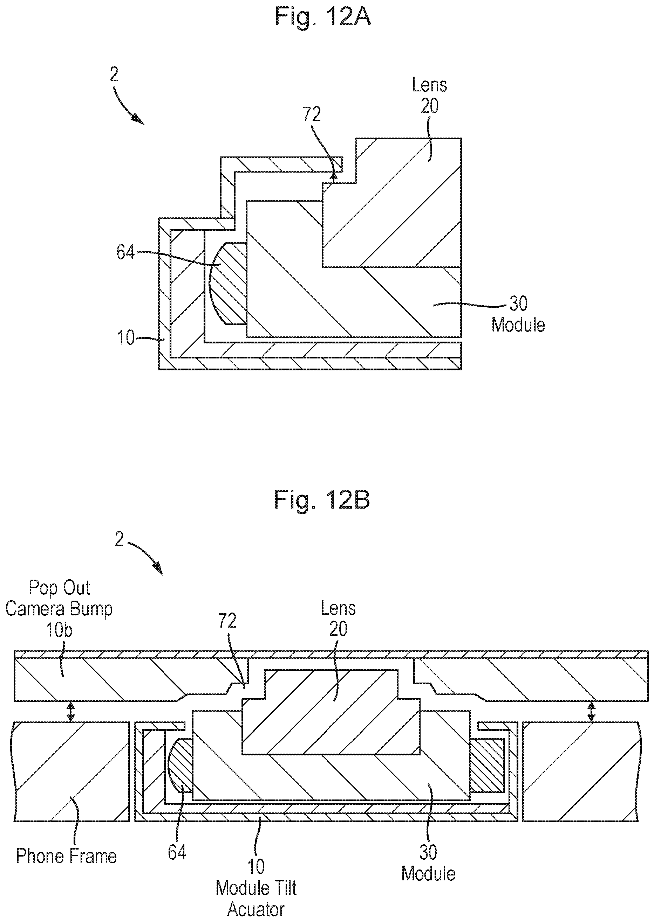

In the example shown in Fig. 10, the second bearing assembly 42 takes the form of the non-rotating general bearing discussed in relation to Fig. 12 of GB2005573.6, which in incorporated herein by reference.

When the actuator arrangement applies forces corresponding to a lateral shift (forces perpendicular to the predetermined axis *z*) to the moving part 20, i.e. a movement having components Tx and/or Ty along corresponding first and second axes *x*, *y,* this movement is constrained by the first bearing arrangement in the form of the helical flexure arms 41-1, 41-2, 41-3, 41-4, but is guided by the second bearing arrangement 42. Consequently, the response to application of forces corresponding to a lateral shift by the actuator arrangement will be primarily a lateral shift of the moving part 20 relative to the static part 10, accommodated and guided by the second bearing 42. However, if the actuator arrangement additionally or alternatively applies a torque about the predetermined axis *z,* the second bearing 42 is substantially constrained from rotation about the primary axis *z.* Consequently, the second bearing 42 will transmit substantially all of an applied torque to the first bearing in the form of flexure arms 41-1, 41-2, 41-3, 41-4. In response to the applied torque, the first bearing will undergo a helical motion [Tz, Rz] along and about the predetermined axis *z.* In this way, the actuator assembly 4 may provide an OIS function based on lateral shifts Tx and/or Ty, and an autofocussing (AF) function based on helical movement [Tz, Rz], using the single stage actuator comprising four lengths of SMA wires 53-1, 53-2, 53-3, 53-4. The two functions may be substantially independent, because the actuator arrangement is capable of applying torques and lateral forces substantially independently across at least part of a range of motion.

The first actuator assembly 4 of Fig 10 may also include a third bearing arrangement in the form of a planar bearing formed by sliding of the moving part 20 against parts of the second bearing arrangement 42 not fixed to the moving part 20.

Fig. 9 illustrates an alternative embodiment of actuator assembly 4. The arrangement of the one or more overall endstops 71-73 in this embodiment is similar to that of Fig 8. However, in Fig. 9 the function of the first bearing arrangement 41 and second bearing arrangement 42 are swapped relative to Fig. 8. In Fig. 9 the first bearing arrangement 41 guides movement of the intermediate part 30 relative to the static part 10. The movement guided by the first bearing arrangement 41 is translational movement orthogonal to the predetermined axis and/or rotational movement around a line parallel to the predetermined axis (which may be the optical axis O). The second bearing arrangement 42 guides movement of the moving part 20 relative to the intermediate part 30. The movement by the second bearing arrangement 42 is helical movement around the predetermined axis. The bearing arrangement 42 converts rotation of the intermediate part 30 around the predetermined axis relative to the moving part 20 (or vice versa) into translational movement along the predetermined axis, similar to the operation of the first bearing 41 of Fig. 8.

Actuator assembly 4 of Fig. 9 further comprises a third bearing arrangement 43 which guides movement of the moving part 20 relative to the static part 10. In this illustrated embodiment, the movement of the moving part 20 relative to the static part 10 guided by the third bearing arrangement 43 is translational movement along the predetermined axis and/or translational movement orthogonal to the predetermined axis. The third bearing arrangement 43 substantially prevents rotation of the moving part 20 around the predetermined axis relative to the static part 10. This arrangement is particularly useful when the moving part 20 comprises a lens element 21. In practice, any lens element 21 will have non-uniformities across its surface. It is therefore desirable to maintain the rotational position of the lens element 21 with respect to the image sensor 11. Third bearing arrangement 43 maintains this rotational position, even when the intermediate part 30 rotates.

In Fig. 9, the actuator arrangement 53 connects between the intermediate part 30 and static part 10, rather than between the moving part 20 and static part 10 as in Fig. 8. The actuator arrangement is configured drive translational movement of the intermediate part 30 perpendicular to the predetermined axis relative to the static part 10, guided by the first bearing arrangement 41. Translation of the intermediate part 30 perpendicular to the predetermined axis also translates the moving part 20. Thus translation of the intermediate part 30 can be used to provide optical image stabilisation (OIS) in a camera.

The actuator arrangement 53 is further configured to drive rotation of the intermediate part 30 around the predetermined axis. As the rotational position of the moving part 20 relative to the static part 10 is held fixed by third bearing arrangement 43, rotation of the intermediate part 30 engages the second bearing arrangement 42. Due to the helical nature of the second bearing arrangement, this rotation is converted into translation along the predetermined axis. As the position of the intermediate part 30 with respect to the static part 10 is held fixed by first bearing arrangement 41, it is the moving part 20 that translates along the predetermined axis in response to the rotation of the intermediate part 30. Thus, rotation of the intermediate part 30 can be used to provide autofocussing in a camera.

The design and arrangement of the actuator arrangement 53 itself may be substantially similar to that described in relation to Fig. 8, albeit connected to the intermediate part 30 rather than the moving part 20. In particular, the actuator arrangement 53 comprises a single actuator stage, and may comprise at least one SMA wire.

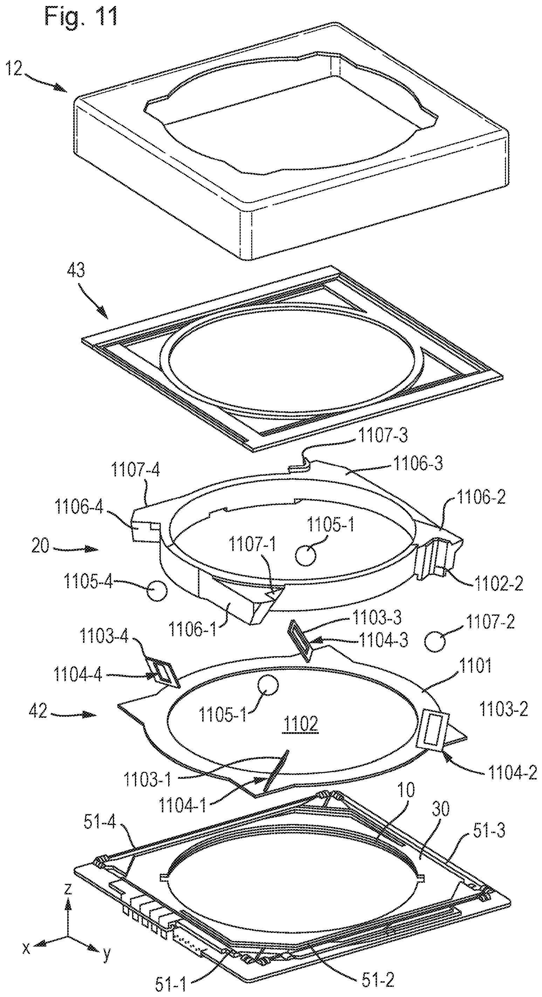

Fig. 11 illustrates a particular embodiment of the actuator assembly 4 of Fig. 9. Fig. 11 shows an exploded perspective view of the actuator assembly 4. For clarity, the overall endstops 71-73 are not illustrated in Fig. 11. The embodiment of Fig. 11 is a version of that discussed in relation to Figs. 33-35 of GB2005573.6, which is incorporated herein by reference, modified to incorporate the overall endstops 71-73 discussed above.

The actuator assembly 4 of Fig. 11 takes the form of a four-SMA-wire actuator assembly. The actuator assembly 4 comprises a moving part 20, a static part 10, and a intermediate part 30 mechanically coupled to the moving part 20 by a second (e.g. helical type) bearing arrangement 42, which is similar to the first bearing arrangement 41 of Fig. 10. However, unlike in Fig 10, an actuator arrangement is connected between the intermediate part 30 and the static part 10.

The actuator assembly 4 of Fig. 11 comprises a third bearing arrangement 43 mechanically coupling the moving part 20 to the static part 10. The third bearing arrangement 43 is configured to guide movement Tx, Ty, Tz of the moving part 20 relative to the static part 10 along the first axis *x,* the second axis y and/or the third (predetermined) axis *z,* whilst constraining rotation Rz of the moving part 20 relative to the static part 10 about the predetermined axis *z.* The third bearing arrangement 43 could be, without limitation, any one of the non-rotating general bearings described in relation to Figs. 10A, 10B, 11, and 12 of GB2005573.6, which is incorporated herein by reference. Other bearings could be used but would need to be connected in series with a further bearing permitting translation Tz along the primary axis *z.*

The actuator assembly 4 of Fig. 11 also comprises a first (e.g. planar) bearing 41 arrangement mechanically coupling the static part 10 to the intermediate part 30. The first bearing 41 is not shown in Fig. 11. The intermediate part 30 is coupled to the static part 10 using the four lengths SMA wires 51-1, 51-2, 51-3, 51-4 which form an actuator arrangement substantially similar to the actuator arrangement described in relation to Fig. 10, albeit connected to the intermediate part 30 rather than the moving part 20.

The second bearing arrangement 42 is a helical roller bearing 56 comprising an annulus 1101 having a circular inner perimeter defining a central aperture 1102, and an outer perimeter which alternates between rectangular and circular outlines. The annulus 1101 supports four ramps 1103-1, 1103-2, 1103-3, 1103-4, equi-spaced in a loop about the central aperture 1102. Each ramp 1103-1, 1103-2, 1103-3, 1103-4 takes the form of a rectangular frame having an elongated aperture 1104-1, 1104-2, 1104-3, 1104-4 extending along a length of the ramp 1103-1, 1103-2, 1103-3, 1103-4. The ramps 1103-1, 1103-2, 1103-3, 1103-4 all make substantially equal angles to the annulus 1102 (which lies in a plane parallel to first and second axes *x*, *y*)*.* When assembled, each elongated aperture 1104-1, 1104-2, 1104-3, 1104-receives a corresponding ball bearing 1105-1, 1105-2, 1105-3, 1105-4.

The moving part 20 (which may a lens carriage supporting a lens element 21, not shown) comprises four protrusions 1106-1, 1106-2, 1106-3, 1106-4 extending radially outwards from the moving part 20. The first and third protrusions 1106-1, 1106-3 each define a corresponding bearing surface 1107-1, 1107-2 in the form of a V-shaped channel oriented generally downwards (normals to the first/third bearing surface 1107-1, 1107-3 have components generally in the negative *-z* direction along the predetermined axis *z*). The second and fourth protrusions 1106-2, 1106-4 define second and fourth bearing surfaces 1107-2, 1107-4 the form of a V-shaped channel. The second/fourth bearing surfaces 1107-2, 1107-4 are oriented generally upwards (normals to the second/fourth bearing surface 1107-2, 1107-4 have components generally in the positive *+z* direction along the predetermined axis *z*).

When assembled, each bearing surface 1107-1, 1107-2, 1107-3, 1107-4 is in rolling contact with the corresponding ramp 1103-1, 1103-2, 1103-3, 1103-4 via the respective ball bearing 1105-1, 1105-2, 1105-3, 1105-4.

It is noted that the form of the second bearing 42 of Fig. 11 may be used as the helical first bearing in actuator assemblies 4 of Figs. 8 and 10. Similarly, the form of the first bearing (in the form of flexure arms 41-1, 41-2, 41-3, 41-4) of Fig. 10 may be used as the second bearing 42 in actuator assemblies 4 of Figs. 9 and 11.

Returning to Fig. 11, in use, if the actuator arrangement applies a lateral force (substantially perpendicular to the predetermined axis *z*), then the second bearing 42 cannot respond with a movement Tx and/or Ty in the direction of the applied lateral force. However, the third bearing arrangement 43 may guide movement Tx and/or Ty in the direction of the applied lateral force, allowing lateral movement of the moving part 20 with respect to the static part 10. However, when the actuator arrangement additionally or alternatively applies a torque about the primary axis *z*, the third bearing arrangement 43 constrains the moving part 20 from rotating Rz relative to the static part 10. The response to an applied torque is that the intermediate part 30 will rotate. This rotation will cause the ball bearings 1105-1, 1105-2, 1105-3, 1105-4 to roll between the ramps 1103-1, 1103-2, 1103-3, 1103-4 and bearing surfaces 1107-1, 1107-2, 1107-3, 1107-4, displacing the moving part 20 up or down (relative to the predetermined axis z) depending on the direction of the torque and corresponding rotation Rz. However, the moving part 20 does not rotate Rz about the predetermined axis z because of the constraint provided by the fourth bearing 54. In this way, OIS and AF functions may be provided using a single actuator arrangement 11, 20 including a total of four SMA wires 51-1, 51-2, 51-3, 51-4, whilst also avoiding rotation Rz of any lens element 21 about the optical axis. Amongst other things, this may improve the quality of images by reducing the possibility of aberrations resulting from imperfect circular symmetry of one or more lenses 10.

### Spherical endstop provision

Figure 12A depicts another embodiment of the actuator assembly 2 described in relation to Figure 5. The actuator assembly 2 comprises the static part 10, the moving part 20 and the intermediate part 30. The actuator assembly 2 also comprises the first and second bearing arrangements 41, 42 and the first and second actuator stages 51, 52, although these are not depicted for reasons of illustrative simplicity.

As already described with reference to Figure 5, the intermediate part 30 is movable relative to the static part 10 by tilting about two perpendicular axes. The two perpendicular axes may be orthogonal to an optical axis of a lens that is part of the actuator assembly 2. In some embodiments, the intermediate part 30 is movable relative to the static part 10 additionally by rotating about the optical axis. Movement of the intermediate part 30 relative to the static part 10 is guided by the first bearing arrangement 41 and the first actuator stage 51. This enables OIS in a camera.

The moving part 20 is translationally movable relative to the intermediate part 30 along an axis that is orthogonal to the two perpendicular axes. The axis may correspond to the optical axis of a lens that is part of the actuator assembly 2. Movement of the moving part 20 relative to the intermediate part 30 is guided by the second bearing arrangement 42 and the second actuator stage 52. This enables AF in a camera.

The actuator assembly 2 comprises a spherical endstop 64 between the intermediate part 30 and the static part 10. The spherical endstop 64 surrounds the intermediate part 30. The spherical endstop 64 may designed such that the shortest distance between static part 10 and intermediate part 30 remains constant as the intermediate part 30 tilts and/or rotates relative to the static part 10. One embodiment of a spherical endstop 64 is described in co-pending GB application number 2104391.4, which is herein incorporated by reference. In general, the spherical endstop comprises spherical surfaced on the static part 10 and the intermediate part 30. The center of the spherical surfaces coincides with the point of tilt/rotation of the intermediate part 30 relative to the static part.

One possible drawback of the spherical endstops is that the moving part 20 is allowed to undergo relatively large z displacement during drop scenarios. This is due to the clearances required for the tilt movement combined with the offset, from the optical axis, of the endstop surfaces. The relatively large z displacement also is due to the combination of the intermediate part 30 moving along the optical axis to the extent allowed by the spherical endstop envelope, combined with the moving part 20 moving to the extents of its endstop envelope. This results in a larger than fundamentally required lens to external casing (camera class) clearance.

The actuator assembly 2 of Figure 12 aims to address this possible drawback by providing overall endstop 72. Overall endstop 72 limits movement of the moving part 20 along the optical axis. The overall endstop 72 is provided between the moving part 20 and the static part 10.

12B schematically depicts another refinement of the actuator assembly 2 described in relation to Figure 12A. In Figure 12B, the overall endstop 72 is provided on a portion 10b of the static part 10 that is displaceable between an employed and a non-employed position. The portion 10b may, for example, be embodied in a retractable camera bump on a smart phone. When the camera is in use, the portion 10b may be extended to the employed position, thus allowing movement of the moving part 20 and intermediate part 30 as described above and providing the overall endstop 72. When the camera is not in use, the portion 10b may be retracted to the non-employed position, which may reduce or even remove any clearance allowed by the overall endstop 72.

### Ball bearing denting reduction

As mentioned throughout this description, the first and/or second bearing arrangements 41, 42 may comprise ball bearings or other rolling bearings. In particular, the first and/or second bearing arrangements 41, 42 may comprise two bearing surfaces, respectively on the static part 10 and intermediate part 30 or on the intermediate part 30 and moving part 20. A rolling bearing element, such as a ball bearing element, may be provided between the two bearing surfaces. The two bearing surfaces are thus movable relative to each other by the rolling bearing element rolling on the two bearing surfaces.

The actuator assembly described in relation to Figure 11 is just one example comprising a rolling bearing. Further actuator assemblies comprising rolling bearings are disclosed, for example, in WO2007113478, WO2017134456 or WO2019243849, each of which is herein incorporated by reference. WO2019243849, for example, describes an actuator assembly for providing AF in a camera. This actuator assembly may be provided as the second actuator stage 52 in any of the preceding embodiments. The actuator assembly comprises a support structure (which may correspond to the intermediate part 30); a movable element (which may correspond to the moving part 20); a helical bearing arrangement (which may correspond to the second bearing arrangement 42) supporting the movable element on the support structure and arranged to guide helical movement of the movable element with respect to the support structure around a helical axis; and at least one shape memory alloy actuator wire (which may correspond to the second actuator stage 52) connected between the support structure and the movable element in, or at an acute angle to, a plane normal to the helical axis and arranged, on contraction, to drive rotation of the movable element around the helical axis which the helical bearing arrangement converts into said helical movement. The helical bearing arrangement may comprise one or more helical bearings that are rolling bearings, such as ball bearings.

During impact events, such as drops, rolling bearings may suffer damage due to denting of the bearing surfaces. This may reduce the accuracy and/or reliability of the movement guided by the rolling bearing.

Provision of the overall endstops, as described herein, reduces the risk of damage due to denting of the bearing surfaces.

Described herein are further concepts for reducing the risk of damage due to denting of the bearing surfaces in rolling bearings. These concepts may be applied to any actuator assemblies described herein, and may be used without the overall endstop.

A first concept for reducing the risk of damage due to denting of the bearing surfaces in rolling bearings is to introduce flexibility in one or both of the bearing surfaces. For example, one or both of the bearing surfaces may be formed from a flexible material, such as sheet metal. Flexibility could also be achieved by, for example, making separate bearing race moldings and spring loading them with a flexure system. The rolling bearings may thus be sprung bearings. The stiffness of the bearing surfaces may be selected such that the bearing surfaces do not or only minimally deflect under normal operation, but do deflect under impact events. Impacts may thus be absorbed by the resilience of the bearing surfaces instead of leading to denting. Examples of sprung bearings are described in relation to Figures 11 to 15 of WO2014/083318 A1, which is herein incorporated by reference. The resilient members described in WO2014/083318 A1 may be applied to any of the roiling bearings described herein.

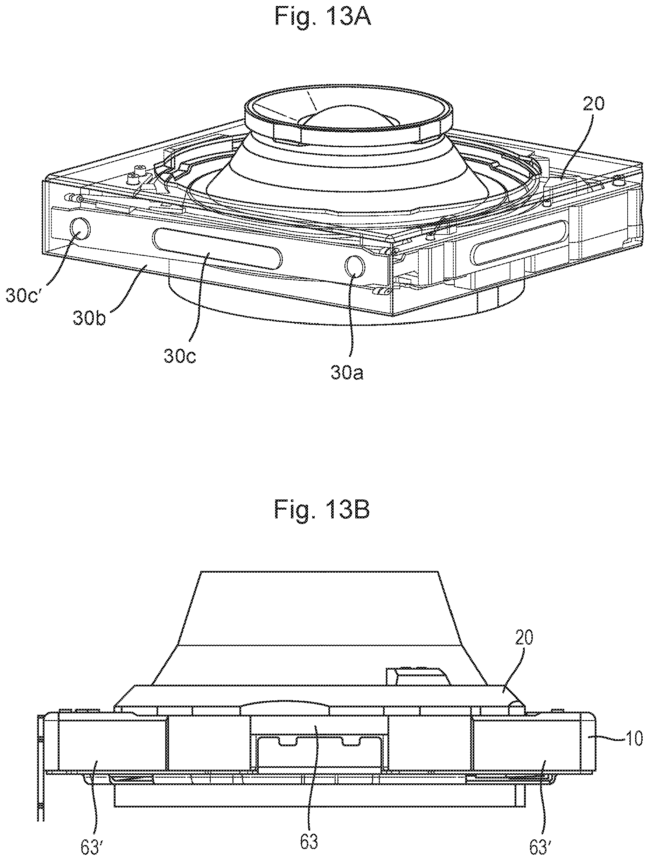

According to a second concept, flexibility may also be provided more generally in the body of the support structure (e.g. intermediate part 30) or of the movable element (e.g. moving part 20). For example, as depicted in Figure 13A, the support structure (e.g. intermediate part 30) may comprise a first portion 30a and a second portion 30b, coupled to one another vie a resilient element (which in Figure 13A is embodied by flexibility in the first portion 30a). The first portion 30a may provide the second bearing arrangement 42. The second portion 30b may be coupled to the first bearing arrangement 41. In Figure 13A, the first portion 30a is glued to the second portion 30b in region 30c but not in region 30c', such that the corners of the first portion 30a (where the helical rolling bearings are located) are allowed to flex relative to the second portion 30b. The stiffness of the resilient element may be selected such that the bearing surfaces do not or only minimally deflect under normal operation, but do deflect under impact events. Impacts may thus be absorbed by the resilience of the bearing surfaces instead of leading to denting.

As a further refinement of tis second concept, the OIS endstop 63 may be provided to location 63 instead of location 63', as shown in Figure 13B. So, the OIS endstop 63 may preferentially be provided at the center of rather than at the corners of the actuator assembly. This further allows the corners of the moving part 20 to flex so as to absorb impact events, reducing the risk of damage due to denting of the bearing surfaces in rolling bearings.

The above-described actuator assemblies comprise an SMA wire. The term 'shape memory alloy (SMA) wire' may refer to any element comprising SMA. The SMA wire may have any shape that is suitable for the purposes described herein. The SMA wire may be elongate and may have a round cross section or any other shape cross section. The cross section may vary along the length of the SMA wire. It is also possible that the length of the SMA wire (however defined) may be similar to one or more of its other dimensions. The SMA wire may be pliant or, in other words, flexible. In some examples, when connected in a straight line between two elements, the SMA wire can apply only a tensile force which urges the two elements together. In other examples, the SMA wire may be bent around an element and can apply a force to the element as the SMA wire tends to straighten under tension. The SMA wire may be beam-like or rigid and may be able to apply different (e.g. non-tensile) forces to elements. The SMA wire may or may not include material(s) and/or component(s) that are not SMA. For example, the SMA wire may comprise a core of SMA and a coating of non-SMA material. Unless the context requires otherwise, the term 'SMA wire' may refer to any configuration of SMA wire acting as a single actuating element which, for example, can be individually controlled to produce a force on an element. For example, the SMA wire may comprise two or more portions of SMA wire that are arranged mechanically in parallel and/or in series. In some arrangements, the SMA wire may be part of a larger piece of SMA wire. Such a larger piece of SMA wire might comprise two or more parts that are individually controllable, thereby forming two or more SMA wires.

Those skilled in the art will appreciate that the present disclosure should not be limited to the specific configurations and methods disclosed in this description of the preferred embodiment. Those skilled in the art will recognize that the present invention has a broad range of applications, and that the embodiments may take a wide range of modifications without departing from the scope defined in the appended claims.

## Claims

1. An actuator assembly (2, 3, 4) comprising:
a static part (10);
a moving part (20);
an intermediate part (30);
a first bearing arrangement (41) which guides movement of the intermediate part relative to the static part;
a second bearing arrangement (42) which guides movement of the moving part relative to the intermediate part; and
an actuator arrangement (51, 52, 53) arranged to drive movement of the moving part relative to the static part; and **characterised by**
at least one overall endstop (71, 72, 73) between the static part and the moving part and arranged such that the moving part contacts the static part at a limit of movement of the moving part relative to the static part.

2. An actuator assembly (2, 3, 4) according to claim 1, further comprising at least one moving-intermediate endstop (61, 62, 65) between the intermediate part (30) and the moving part (20) and arranged such that the moving part contacts the intermediate part at a limit of movement of the moving part relative to the intermediate part.

3. An actuator assembly (2, 3, 4) according to claim 1 or claim 2, wherein the actuator arrangement (51; 52) comprises:
an actuator stage (52) arranged to drive movement of the moving part (20) relative to the intermediate part (30) guided by the second bearing arrangement (42) and a second actuator stage (51) arranged to drive the movement of the intermediate part relative to the static part (10) guided by the first bearing arrangement.

4. An actuator assembly (2, 3, 4) according to 3, wherein
the actuator assembly further comprises a biasing arrangement (81) arranged to bias the movement of the intermediate part (30) relative to the static part (10) guided by the first bearing arrangement (41) towards a central position.

5. An actuator assembly (2, 3, 4) according to any preceding claim, wherein the movement of
the moving part (20) relative to the intermediate part (30) guided by the second bearing arrangement (42) comprises or is translational movement along a predetermined axis.

6. An actuator assembly (2, 3, 4) according to claim 5, wherein the movement of the intermediate part (30) relative to the static part (10) guided by the first bearing arrangement (41) is translational and/or rotational movement orthogonal to the predetermined axis.

7. An actuator assembly (2, 3, 4) according to claim 1 or claim 2, wherein the actuator arrangement comprises a single actuator stage (53) arranged to drive relative movement between any two of the moving part (20), the intermediate part (30) and the static part (10), and the single actuator stage is configured to independently drive movement of the moving part relative to the intermediate part guided by the second bearing arrangement (42) and movement of the intermediate part relative to the static part guided by the first bearing arrangement (41).

8. An actuator assembly (2, 3, 4) according to claim 7, wherein the actuator assembly further comprises a third bearing arrangement (43) which guides movement of the moving part (20) relative to the static part (10).

9. An actuator assembly (2, 3, 4) according to claim 8, wherein
the movement of the moving part (20) relative to the intermediate part (30) guided by the second bearing arrangement (42) is helical movement around a predetermined axis (O),
the movement of the intermediate part relative to the static part (10) guided by the first bearing arrangement (41) is translational movement orthogonal to the predetermined axis (O) and/or rotational movement around a line parallel to the predetermined axis, and
the movement of the moving part relative to the static part guided by the third bearing arrangement (43) is translational movement along the predetermined axis and/or translational movement orthogonal to the predetermined axis.

10. An actuator assembly (2, 3, 4) according to claim 9, wherein
the movement of the moving part (20) relative to the intermediate part (30) guided by the second bearing arrangement (42) is translational movement orthogonal to the predetermined axis (O), and
the movement of the intermediate part relative to the static part (10) guided by the first bearing arrangement (41) is helical movement around the predetermined axis.

11. An actuator assembly (2, 3, 4) according to any one of claims 3 to 10, wherein the actuator arrangement (51, 52, 53) comprises at least one shape memory alloy wire and the or each actuator stage comprises at least one shape memory alloy wire.

12. An actuator assembly (2, 3, 4) according to any one of claims 1 to 8, wherein the overall endstop (71, 72, 73) is configured to limit three-dimensional translational movement of the moving part (20) relative to the static part (10) and/or to limit rotational movement of the moving part relative to the static part (10) around a line parallel to a predetermined axis (O).

13. An actuator assembly (2, 3, 4) according to any preceding claim, wherein the overall endstop (71, 72, 73) comprises at least one surface on the static part (10) configured to engage with a substantially conformal surface on the moving part (20) so as to limit the movement.

14. An actuator assembly (2, 3, 4) according to any one of the preceding claims, wherein the moving part (20) comprises a lens element (21) having an optical axis (O) and the static part (10) comprises a screening can (12) that extends around the lens element, the intermediate part (30), and the actuator arrangement (51, 52, 53), and the at least one overall endstop (701, 72, 73) is provided at least in part by the screening can.

15. An actuator assembly according to any one of the preceding claims, wherein the mass of the intermediate part (30) is less than the mass of the moving part (20).

## Patentansprüche

1. Aktuatorbaugruppe (2, 3, 4), umfassend:
ein statisches Teil (10);
ein sich bewegendes Teil (20);
ein Zwischenteil (30);
eine erste Lageranordnung (41), die die Bewegung des Zwischenteils relativ zu dem statischen Teil führt;
eine zweite Lageranordnung (42), die die Bewegung des sich bewegenden Teils relativ zu dem Zwischenteil führt; und
eine Aktuatoranordnung (51, 52, 53), der angeordnet ist, um die Bewegung des sich bewegenden Teils relativ zu dem statischen Teil anzutreiben; und **gekennzeichnet durch**
wenigstens einen Gesamtendanschlag (71, 72, 73) zwischen dem statischen Teil und dem sich bewegenden Teil, der derart angeordnet ist, dass das sich bewegende Teil das statische Teil an einer Bewegungsgrenze des sich bewegenden Teils relativ zu dem stationären Teil berührt.

2. Aktuatorbaugruppe (2, 3, 4) nach Anspruch 1, ferner umfassend wenigstens einen sich bewegenden Zwischenendanschlag (61, 62, 65) zwischen dem Zwischenteil (30) und dem sich bewegenden Teil (20) und derart angeordnet, dass das sich bewegende Teil das Zwischenteil an einer Bewegungsgrenze des sich bewegenden Teils relativ zu dem Zwischenteil berührt.

3. Aktuatorbaugruppe (2, 3, 4) nach Anspruch 1 oder 2, wobei die Aktuatorbaugruppe (51; 52) umfasst:
eine Aktuatorstufe (52), die angeordnet ist, um die Bewegung des sich bewegenden Teils (20) relativ zu dem Zwischenteil (30) anzutreiben, die von der zweiten Lageranordnung (42) geführt wird, und eine zweite Aktuatorstufe (51), die angeordnet ist, um die Bewegung des Zwischenteils relativ zu dem statischen Teil (10) anzutreiben, die von der ersten Lageranordnung geführt wird.

4. Aktuatorbaugruppe (2, 3, 4) nach 3, wobei
die Aktuatorbaugruppe ferner eine Vorspannanordnung (81) umfasst, die angeordnet ist, um die Bewegung des durch die erste Lageranordnung (41) geführten Zwischenteils (30) relativ zu dem statischen Teil (10) in Richtung einer Mittelposition vorzuspannen.

5. Aktuatorbaugruppe (2, 3, 4) nach einem der vorstehenden Ansprüche, wobei die Bewegung des durch die zweite Lageranordnung (42) geführten sich bewegenden Teils (20) relativ zu dem Zwischenteil (30) eine Translationsbewegung entlang einer vorbestimmten Achse umfasst oder diese ist.

6. Aktuatorbaugruppe (2, 3, 4) nach Anspruch 5, wobei die Bewegung des Zwischenteils (30) relativ zu dem statischen Teil (10), das durch die erste Lageranordnung (41) geführt wird, eine Translations- und/oder Rotationsbewegung orthogonal zu der vorbestimmten Achse ist.

7. Aktuatorbaugruppe (2, 3, 4) nach Anspruch 1 oder 2, wobei die Aktuatorbaugruppe eine einzige Aktuatorstufe (53) umfasst, die angeordnet ist, um eine Relativbewegung zwischen beliebigen zwei des sich bewegenden Teils (20), des Zwischenteils (30) und des statischen Teils (10) zu erzeugen, und die einzige Aktuatorstufe dazu konfiguriert ist, unabhängig die Bewegung des sich bewegenden Teils relativ zu dem Zwischenteil, die von der zweiten Lageranordnung (42) geführt wird, und die Bewegung des Zwischenteils relativ zu dem statischen Teil, die von der ersten Lageranordnung (41) geführt wird, anzutreiben.

8. Aktuatorbaugruppe (2, 3, 4) nach Anspruch 7, wobei die Aktuatorbaugruppe ferner eine dritte Lageranordnung (43) umfasst, die die Bewegung des sich bewegenden Teils (20) relativ zu dem statischen Teil (10) führt.

9. Aktuatorbaugruppe (2, 3, 4) nach Anspruch 8, wobei
die Bewegung des sich bewegenden Teils (20) relativ zu dem Zwischenteil (30), die durch die zweite Lageranordnung (42) geführt wird, eine schraubenförmige Bewegung um eine vorbestimmte Achse (O) ist,
die Bewegung des Zwischenteils relativ zu dem statischen Teil (10), die durch die erste Lageranordnung (41) geführt wird, eine Translationsbewegung orthogonal zu der vorbestimmten Achse (O) und/oder eine Rotationsbewegung um eine zu der vorbestimmten Achse parallele Linie ist, und
die Bewegung des sich bewegenden Teils relativ zu dem statischen Teil, die durch die dritte Lageranordnung (43) geführt wird, eine Translationsbewegung entlang der vorbestimmten Achse und/oder eine Translationsbewegung orthogonal zu der vorbestimmten Achse ist.

10. Aktuatorbaugruppe (2, 3, 4) nach Anspruch 9, wobei
die Bewegung des sich bewegenden Teils (20) relativ zu dem Zwischenteil (30), die durch die zweite Lageranordnung (42) geführt wird, eine Translationsbewegung orthogonal zu der vorbestimmten Achse (O) ist, und
die Bewegung des Zwischenteils relativ zu dem statischen Teil (10), die durch die erste Lageranordnung (41) geführt wird, eine schraubenförmige Bewegung um die vorbestimmte Achse ist.

11. Aktuatorbaugruppe (2, 3, 4) nach einem der Ansprüche 3 bis 10, wobei die Aktuatorbaugruppe (51, 52, 53) wenigstens einen Draht aus einer Formgedächtnislegierung umfasst und die oder jede Aktuatorstufe wenigstens einen Draht aus einer Formgedächtnislegierung umfasst.

12. Aktuatorbaugruppe (2, 3, 4) nach einem der Ansprüche 1 bis 8, wobei der Gesamtendanschlag (71, 72, 73) dazu konfiguriert ist, die dreidimensionale Translationsbewegung des sich bewegenden Teils (20) relativ zu dem statischen Teil (10) zu begrenzen und/oder die Drehbewegung des sich bewegenden Teils relativ zu dem statischen Teil (10) um eine zu einer vorbestimmten Achse (O) parallele Linie zu begrenzen.

13. Aktuatorbaugruppe (2, 3, 4) nach einem der vorstehenden Ansprüche, wobei der Gesamtendanschlag (71, 72, 73) wenigstens eine Oberfläche auf dem statischen Teil (10) umfasst, die dazu konfiguriert ist, in eine im Wesentlichen konforme Oberfläche an dem sich bewegenden Teil (20) einzugreifen, um die Bewegung zu begrenzen.

14. Aktuatorbaugruppe (2, 3, 4) nach einem der vorstehenden Ansprüche, wobei das sich bewegende Teil (20) ein Linsenelement (21) mit einer optischen Achse (O) umfasst und das statische Teil (10) einen Abschirmbecher (12) umfasst, der sich um das Linsenelement, das Zwischenteil (30) und die Aktuatoranordnung (51, 52, 53) erstreckt, und der wenigstens eine Gesamtendanschlag (701, 72, 73) wenigstens teilweise durch den Abschirmbecher bereitgestellt wird.

15. Aktuatorbaugruppe nach einem der vorstehenden Ansprüche, wobei die Masse des Zwischenteils (30) geringer ist als die Masse des sich bewegenden Teils (20).

## Revendications

1. Ensemble d'actionneur (2, 3, 4) comprenant :
une partie statique (10),
une partie mobile (20),
une partie intermédiaire (30),
un premier agencement de roulement (41) qui guide le mouvement de la partie intermédiaire par rapport à la partie statique,
un deuxième agencement de roulement (42) qui guide le mouvement de la partie mobile par rapport à la partie intermédiaire, et
un agencement d'actionneur (51, 52, 53) agencé pour entraîner le mouvement de la partie mobile par rapport à la partie statique ; et
**caractérisé par** au moins une butée d'extrémité générale (71, 72, 73) située entre la partie statique et la partie mobile et agencée de façon que la partie mobile vienne en contact avec la partie statique à une limite de mouvement de la partie mobile par rapport à la partie statique.

2. Ensemble d'actionneur (2, 3, 4) selon la revendication 1, comprenant en outre au moins une butée intermédiaire/mobile (61, 62, 65) entre la partie intermédiaire (30) et la partie mobile (20) et agencée de façon que la partie mobile vienne en contact avec la partie intermédiaire à une limite de mouvement de la partie mobile par rapport à la partie intermédiaire.

3. Ensemble d'actionneur (2, 3, 4) selon la revendication 1 ou la revendication 2, dans lequel l'agencement d'actionneur (51 ; 52) comprend :
un étage d'actionnement (52) agencé pour entraîner le mouvement de la partie mobile (20) par rapport à la partie intermédiaire (30), guidé par le deuxième agencement de roulement (42), et un deuxième étage d'actionnement (51) agencé pour entraîner le mouvement de la partie intermédiaire par rapport à la partie statique (10), guidé par le premier agencement de roulement.

4. Ensemble d'actionneur (2, 3, 4) selon la revendication 3,
ledit ensemble d'actionneur comprenant en outre un agencement de sollicitation (81) agencé pour solliciter le mouvement de la partie intermédiaire (30) par rapport à la partie statique (10), guidé par le premier agencement de roulement (41), vers une position centrale.

5. Ensemble d'actionneur (2, 3, 4) selon l'une quelconque des revendications précédentes, dans lequel le mouvement de la partie mobile (20) par rapport à la partie intermédiaire (30), guidé par le deuxième agencement de roulement (42), comprend ou consiste en un mouvement de translation le long d'un axe prédéterminé.

6. Ensemble d'actionneur (2, 3, 4) selon la revendication 5, dans lequel le mouvement de la partie intermédiaire (30) par rapport à la partie statique (10), guidé par le premier agencement de roulement (41), est un mouvement de translation et/ou de rotation orthogonal à l'axe prédéterminé.

7. Ensemble d'actionneur (2, 3, 4) selon la revendication 1 ou la revendication 2, dans lequel l'agencement d'actionneur comprend un étage d'actionnement unique (53) agencé pour entraîner un mouvement relatif entre deux parties quelconques parmi la partie mobile (20), la partie intermédiaire (30) et la partie statique (10), et l'étage d'actionnement unique est conçu pour entraîner indépendamment le mouvement de la partie mobile par rapport à la partie intermédiaire, guidé par le deuxième agencement de roulement (42), et le mouvement de la partie intermédiaire par rapport à la partie statique, guidé par le premier agencement de roulement (41).

8. Ensemble d'actionneur (2, 3, 4) selon la revendication 7, ledit ensemble d'actionneur comprenant en outre un troisième agencement de palier (43) qui guide le mouvement de la partie mobile (20) par rapport à la partie statique (10).

9. Ensemble d'actionneur (2, 3, 4) selon la revendication 8, dans lequel
le mouvement de la partie mobile (20) par rapport à la partie intermédiaire (30), guidé par le deuxième agencement de palier (42), est un mouvement hélicoïdal autour d'un axe prédéterminé (O),
le mouvement de la partie intermédiaire par rapport à la partie statique (10), guidé par le premier agencement de roulement (41), est un mouvement de translation orthogonal à l'axe prédéterminé (O) et/ou un mouvement de rotation autour d'une ligne parallèle à l'axe prédéterminé, et
le mouvement de la partie mobile par rapport à la partie statique, guidé par le troisième agencement de roulement (43), est un mouvement de translation le long de l'axe prédéterminé et/ou un mouvement de translation orthogonal à l'axe prédéterminé.

10. Ensemble d'actionneur (2, 3, 4) selon la revendication 9, dans lequel
le mouvement de la partie mobile (20) par rapport à la partie intermédiaire (30), guidé par le deuxième agencement de palier (42), est un mouvement orthogonal à l'axe prédéterminé (O), et
le mouvement de la partie intermédiaire par rapport à la partie statique (10), guidé par le premier agencement de palier (41), est un mouvement hélicoïdal autour de l'axe prédéterminé.

11. Ensemble d'actionneur (2, 3, 4) selon l'une quelconque des revendications 3 à 10, dans lequel l'agencement d'actionneur (51, 52, 53) comprend au moins un fil en alliage à mémoire de forme et le ou les étages d'actionnement comprennent au moins un fil en alliage à mémoire de forme.

12. Ensemble d'actionneur (2, 3, 4) selon l'une quelconque des revendications 1 à 8, dans lequel la butée d'extrémité générale (71, 72, 73) est conçue pour limiter un mouvement de translation tridimensionnel de la partie mobile (20) par rapport à la partie statique (10) et/ou pour limiter un mouvement de rotation de la partie mobile par rapport à la partie statique (10) autour d'une ligne parallèle à un axe prédéterminé (O).

13. Ensemble d'actionneur (2, 3, 4) selon l'une quelconque des revendications précédentes, dans lequel la butée d'extrémité générale (71, 72, 73) comprend au moins une surface présente sur la partie statique (10) conçue pour s'accoupler avec une surface sensiblement conforme présente sur la partie mobile (20) de façon à limiter le mouvement.

14. Ensemble d'actionneur (2, 3, 4) selon l'une quelconque des revendications précédentes, dans lequel la partie mobile (20) comprend un élément de lentille (21) ayant un axe optique (O) et la partie statique (10) comprend un boîtier de protection (12) qui s'étend autour de l'élément de lentille, de la partie intermédiaire (30) et de l'agencement d'actionneur (51, 52, 53), et l'au moins une butée d'extrémité générale (701, 72, 73) est assurée au moins en partie par le boîtier de protection.

15. Ensemble d'actionneur selon l'une quelconque des revendications précédentes, dans lequel la masse de la partie intermédiaire (30) est inférieure à la masse de la partie mobile (20).
